# EUROPEAN PATENT SPECIFICATION

(11) **EP 1 685 765 B1**
(45) Date of publication and mention of the grant of the patent: **13.01.2010**
(21) Application number: 04818888.2
(22) Date of filing: 16.11.2004
(51) Int. Cl.: A23J 3/04, A23L 1/325, A23L 1/33

(54) **DRIED FOOD PRODUCT COMPRISING BONDED FIBROUS FISH MEAT AND SHOWING GOOD SHAPE RETENTION PROPERTIES AND FIBROUS TEXTURE, AND PROCESS FOR PRODUCING THE SAME**
GETROCKNETES, FASERARTIGES FISCHFORMFLEISCH ENTHALTENDES NAHRUNGSMITTEL MIT GUTER FORMHALTIGKEIT UND FASRIGER TEXTUR UND HERSTELLUNG DESSELBEN
ALIMENT SÉCHÉ COMPRENANT DE LA CHAIR DE POISSON FIBREUSE AGGLUTINÉE PRÉSENTANT DE BONNES PROPRIÉTÉS DE RÉTENTION DE LA FORME ET UNE TEXTURE FIBREUSE, ET PROCÉDÉ DE PRODUCTION DU DIT ALIMENT

(30) Priority: 18.11.2003 JP 2003388465
(43) Date of publication of application: 02.08.2006
(73) Proprietor: NIPPON SUISAN KAISHA, LTD., Tokyo 100-8686 (JP)
(72) Inventor: MORI, Takashi., Nippon Suisan Kaisha, Ctr.Res.Lab, Tokyo 192-0906 (JP); KIMURA Ikuo., Nippon Suisan Kaisha, Ctr. Res. Lab, Tokyo 192-0906 (JP)
(74) Representative: HOFFMANN EITLE
(86) International application number: PCT/JP2004/016973
(87) International publication number: WO 2005/048740

(56) References cited:
- JP-A- 7 067 587
- JP-A- 49 035 563
- JP-A- 53 052 656
- JP-A- 58 067 163
- JP-A- 61 260 839
- JP-B1- 50 030 701
- US-A- 4 396 634
- US-A- 4 439 456
- US-A- 4 559 236
- US-A- 5 137 746

## Description

### TECHNICAL FIELD

The invention relates to a dried product of a fibrous fish meat-bound food which is excellent in form retention property, has a fibrous texture not completely unified with a meat paste and is excellent in hot water-rehydration property. Particularly, the invention relates to a dried product of a fibrous fish meat-bound food produced by mixing a fish meat protein molded into a fibrous form by acid-denaturation with a fish meat paste, followed by binding the mixture by molding and heating.

### BACKGROUND ART

A technique in which a protein of an aquatic fish or shellfish meat is processed into a fibrous form or other form through an acid-denaturation treatment is known (Patent Reference 1). A protein food obtained by using this treatment can be secondarily processed into a crab leg meat- or scallop meat-like food by mixing the protein food with a meat paste for binding use and carrying out a heat treatment. In addition, this processed product can also be made into a dried food which can be rehydrated with hot water, by further carrying out a drying treatment such as drying.

However, when the binding property as a physical property before drying is weak, the shape is wrecked during treatments such as tray packing and subsequent treatments such as freezing, thawing, heating or drying. On the contrary, when the binding property is strong, the hot water-rehydration property after drying becomes poor.

Patent Reference 1: JP-B-58-1904

US-A-4 439 456 discloses a process for producing a fibrous fish-based product which comprises adding sodium chloride to fish and/or animal meat; kneading the resulting mixture to prepare a paste; and extruding the paste into an aqueous solution of a protein denaturating agent through a nozzle having fine orifices to produce filaments.

JP-A-067 587 discloses a ground fish or shellfish meat product with a high water retention capacity and elasticity, to which a sodium chloride solution is added.

JP-A-61 260 839 discloses the production of a composite food having the palatability similar to shrimp, crab, cuttlefish or lobster, by mixing a fish paste product with a fibrous structure to impart a directivity to the product and, at the same time, pressing the mixture in a moulding frame. A fibrous structure is produced by conventional methods from a kneaded mixture of fish or cattle meat, separated vegetable protein, polysaccharide, etc. The fibrous structure is mixed into various paste products made from animal protein such as fish meat, cattle meat, vegetable protein such as soybean protein, wheat protein, to orient the fibrous structure along a definite direction in the obtained kneaded mixture and, at the same time, the mixture is poured into a moulding frame and coagulated by heating under pressure.

US-A-5 137 746 discloses a method of producing frozen surimi not containing polyphosphates and possessing good coloration and good elasticity in a surimi-based product, comprising washing minced fish meat; dehydrating the washed minced fish meat to give dehydrated minced fish meat; mixing the dehydrated minced fish meat; adding at least one compound selected from the group consisting of carbonates and bicarbonates in combination with an organic alkaline salt to the dehydrated minced fish meat during the mixing of the fish meat, so as to adjust the pH value of the fish meat to less than 7.5; adding sodium chloride to the dehydrated minced fish meat during the mixing of the fish meat, in an amount of about 0.6 to 1.0% by weight; and freezing the resultant fish meat to produce frozen surimi.

### DISCLOSURE OF THE INVENTION

### Problems to be solved by the invention

The invention aims to improve the form retention property of a dried processed food obtainable by drying a processed product prepared by mixing and binding an acid-denatured fibrous fish protein with a fish meat paste, and further to improve such a processed food in terms of the hot water-rehydration property.

### Means for solving the problems

The present inventors have found that the pH of a final product or a raw fish meat paste for binding use is a factor which exerts an influence upon the form retention property and the hot water-rehydration property after drying. Namely, when the pH is in the acidic side, the binding becomes insufficient due to the progress of denaturation of the meat paste for binding use so that the breaking ratio of the food at the time of drying is increased and reduction of the form retention property is induced. On the contrary, when the pH is in the alkaline side, the hot water-rehydration property becomes poor because of increase of the binding property. According to the invention, it is found that a product having a low flaking ratio and a good hot water-rehydration property can be obtained by adjusting the pH of the final product within a range of from 6.7 to 7.5, preferably from 6.8 to 7.2.

The invention relates to the following processes for producing a dried fibrous fish meat-bound food.
(1) A process for producing a dried fibrous fish meat-bound food, which comprises drying a fibrous fish meat-bound food obtainable by
   molding a fish meat protein into a fibrous form by acid-denaturation, followed by heating;
   adjusting a pH thereof to from 6.7 to 7.5; and
   mixing the fish meat protein with a fish meat paste, followed by molding and heating to thereby bind them.
(2) A process for producing a dried fibrous fish meat-bound food, which comprises drying a fibrous fish meat-bound food obtainable by
   molding a fish meat protein into a fibrous form by acid-denaturation, followed by heating;
   mixing the fish meat protein with a fish meat paste; and
   adjusting a pH thereof to from 6.7 to 7.5, followed by molding and heating to thereby bind them.
(3) A process for producing a dried fibrous fish meat-bound food, which comprises drying a fibrous fish meat-bound food obtainable by
   molding a fish meat protein into a fibrous form by acid-denaturation, followed by heating;
   mixing the fish meat protein with a fish meat paste, followed by molding and heating to thereby bind them; and
   further allowing any one of the fish meat protein molded into a fibrous form by acid-denaturation, the fish meat paste and a mixture thereof to have a buffer function for thereby adjusting a pH thereof to from 6.7 to 7.5.
   In the process for producing a dried fibrous fish meat-bound food according to any one of (1), (2) and (3),
   the fish meat protein molded into a fibrous form by acid-denaturation and the fish meat paste have a mixing weight ratio of from 98:2 to 80:20.
   Moreover, the invention relates to the following dried fibrous fish meat-bound food.
(4) A dried fibrous fish meat-bound food produced by the process according to any one of (1) to (3), which is excellent in form retention property, has a fibrous texture and is excellent in hot water-rehydration property.

### Effect of the Invention

A dried product of a fibrous fish meat-bound food, which is excellent in form retention property, has a fibrous texture not completely unified with a meat paste and is excellent in hot water-rehydration property, can be provided.

### BEST MODE FOR CARRYING OUT THE INVENTION

According to the invention, the fish protein molded into a fibrous form by acid-denaturation (hereinafter referred to as "acid-denaturation fibrous protein") is specifically a product prepared by adding sodium chloride to a fish or shellfish meat, followed by kneading to make a meat paste, and subsequently spin-molding the meat paste into a fibrous form by discharging it into a mixed aqueous solution of sodium chloride and an acid through a nozzle having fine pores. The concentration of the sodium chloride is set to 15% by weight or more. The acids include inorganic acids such as hydrochloric acid and phosphoric acid, or organic acids such as acetic acid and citric acid. It is desirable that the pH of the aqueous acid solution is approximately from 3.0 to 5.0. In addition, it is also possible to add salts as the buffer, such as sodium acetate and sodium citrate. The aqueous sodium chloride-acid solution is generally used at an ordinary temperature, and can be optionally heated. The meat paste discharged from the nozzle is spin-molded in the aqueous solution generally for a period of from 1 second to 3 minutes while the surface protein is quickly denatured and hardened. When a hard fibrous food is desired, it is also possible to harden the food by prolonging the soaking period in the aqueous solution. The protein denaturation degree and the strength of the formed fibers can be adjusted by controlling various conditions such as thickness and discharge pressure of the nozzle; and kind, concentration, temperature, leaving time of the sodium chloride-acid solution. After the material is discharged into the sodium chloride-acid solution and spin-molded as above, the material is then optionally washed with water and further heated for the thermal coagulation of the protein. As heating methods, optional heating methods such as heating in water, cooking in heating steam and high frequency heating are generally used. The heating temperature and time are such a temperature and time that the protein is subjected to thermal coagulation. They are optionally adjusted, depending on the thickness and the amount of the fibers. Thereafter, acid-denaturation fibrous protein is obtained by spin-molding or further washing with water and heating.

According to the invention, a fish meat paste is a product prepared by adding sodium chloride to a fish meat such as chopped meat, minced meat(surimi), frozen minced meat followed by kneading them. Kinds of materials of the acid-denaturation fibrous protein and the meat paste for binding use to be used in the invention are not limited. Various fishes and shellfishes can be used. Specific examples include Alaska pollack, Southern pollack and the like, which are used as minced meat.

According to the invention, it is important to use an acid-denaturation fibrous protein. The physical properties of the invention cannot be obtained when products such as imitation crab meat, which are prepared by cutting fish paste products finely into fibrous form, are simply used. Since proteins are denatured by an acid, it is possible to obtain a food having good texture which is not completely unified with the fish meat paste as a binder and can keep fibrous texture even after the rehydration with hot water.

According to the invention, the acid-denaturation fibrous protein and fish meat paste are mixed. at a mixing ratio (weight ratio) of from 98:2 to 80:20. When the fish meat paste is set to 2 parts by weight or more based on 100 parts by weight of the mixture, sufficient binding can be obtained. In addition, when it is set to 20 parts by weight or less, fibrous texture and excellent hot water-rehydration property can be obtained.

With regard to the heating after mixing, heating methods such as heating in water, cooking in heating steam and high frequency heating are optionally used. The heating temperature and time are such a temperature and time that the protein is subjected to thermal coagulation. They are optionally adjusted depending on the thickness and amount of the final product.

In order to obtain the fibrous fish meat-bound food of the invention, adjustment of the pH is important. It is necessary to adjust the pH of the mixture of the acid-denaturation fibrous protein and fish meat paste to from 6.7 to 7.5, preferably from 6.8 to 7.2. When the pH thereof is not within the above range, as entirely or partially, it causes increase of fraction defective in which the product becomes brittle and easily breakable or, on the contrary, rehydration with hot water becomes poor due to its excessive hardness.

The pH can be adjusted by a means in which pH of the fish meat protein heated and molded into a fibrous form by acid-denaturation is adjusted and then the fish meat protein is mixed with a meat paste, a means in which the fish meat protein heated and molded into a fibrous form by acid-denaturation is mixed with a fish meat paste, and the pH thereof is adjusted to from 6.7 to 7.5, or by a means in which a buffer for adjusting pH is added to any one of the fish meat protein molded into a fibrous form by acid-denaturation, the fish meat paste or a mixture thereof. By using these means, a product having improved form retention property and improved hot water-rehydration property can be produced. Alkalifying agents used in food such as sodium bicarbonate, sodium carbonate and sodium hydroxide may be used for the adjustment of pH, but the effects of the invention are not influenced by the difference between these adjusting methods. The pH of the acid-denaturation fibrous protein can be adjusted by a method such as soaking in an aqueous solution of these alkalifying agents, or washing with an alkalifying agent aqueous solution. In addition, the pH after mixing with a meat paste can be adjusted by adding an aqueous alkalifying agent solution or an alkalifying agent powder thereto, followed by mixing. The buffer function can be provided by adding a buffer for adjusting pH. With regard to the kinds of buffer, disodium hydrogenphosphate, sodium dihydrogenphosphate, acetic acid, sodium hydroxide and the like can be exemplified, but the effects of the invention are not limited depending on the kinds of buffer.

When a fibrous fish meat-bound food is produced, the physical properties thereof depend on the properties of the meat paste for binding use, which exert influences upon the form retention property (flake generation ratio) and the hot water-rehydration property of the fibrous fish meat-bound food. Namely, when the meat for binding use is rich in viscosity and excellent in binding property, physical properties of the meat for binding after heating are increased and the flake generation ratio is decreased, but the hot water-rehydration property is decreased since the meat for binding use is also stuck into the fibrous proteins. On the contrary, when the meat for binding use has low viscosity and is poor in binding property, physical properties of the meat for binding after heating are decreased and the flake generation ratio is increased, but the hot water-rehydration property is improved since gaps for allowing penetration of hot water are formed between the fibrous proteins. The present inventors have found that properties of proteins are greatly influenced by pH. Furthermore, it has been found that viscosity thereof is reduced and physical properties thereof after heating are also reduced when the pH is in the acidic side, and viscosity thereof is increased and physical properties thereof after heating are also increased when the value is in the alkaline side. Accordingly, they regulate the breaking ratio (yield) of a fibrous fish meat-bound food and the hot water-rehydration property by adjusting the pH thereof.

The "hot water-rehydration property" is such a property of a dried product how soon it is reconstituted into the condition before the drying when it is reconstituted by soaking in hot water. The hot water-rehydration property can be expressed by the ratio of the weight of a sample after the reconstitution by soaking in hot water for a predetermined period of time (wet weight) to the weight of the dry product (dry weight), namely expressed by wet weight/dry weight. For example, in the case of the Examples of the invention, moisture of the products before drying is about 75%. Accordingly, when the dry weight is 1, the wet weight becomes 4 when perfectly reconstituted with hot water. When reconstitution with hot water is carried out for 3 minutes by assuming that the product is used in a snack noodle which should be reconstituted with hot water for 3 minutes, it can be used as goods when the wet weight/dry weight is 2 or more, and it can be regarded to have a good hot water-rehydration property when the wet weight/dry weight is 3 or more. Although the value changes depending on the water content of the product before drying, it can be said that the hot water-rehydration property is expressed when the water content after reconstitution with hot water is approximately 50% or more, and can be regarded as good when it is 75% or more.

It is desirable that the dried product of the invention is produced by carrying out freeze-drying, but it is also possible to produce the product by drying methods such as hot air drying.

The fibrous fish meat-bound food and dried product thereof of the invention may contain other foods or additive agents generally used as food. Specific examples include condiments, seasonings, sweeteners, acidity agents, coloring agents, flavors, vitamins, amino acids, preservatives, antioxidants and the like.

Examples of the invention are described in the followings, but the invention is not limited thereto.

### Examples

### Test Example

Influence of pH of meat paste upon physical property of heated gel

### (Method)

A meat paste was mixed and kneaded with 3% of sodium chloride and, after adjusting the pH, the mixture was packed in a casing and heated at 90°C for 40 minutes. In this case, the moisture was adjusted to 71%. After the heating and subsequent spontaneous cooling, physical properties of the heated gel of the meat paste were measured. Hydrochloric acid and sodium hydroxide were used for the adjustment of the pH of the meat paste.

### (Results)

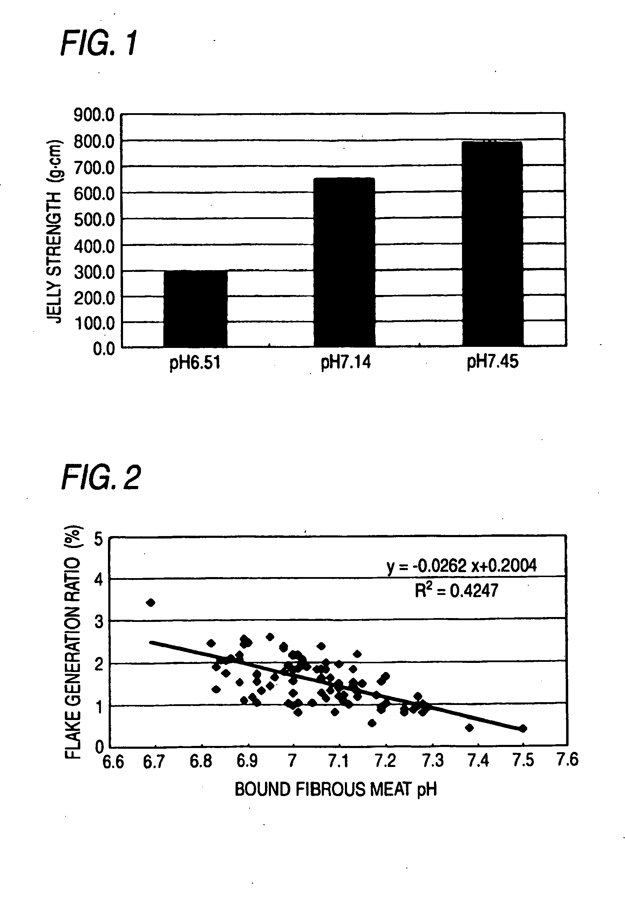

Relationships between the pH of the meat paste and gel physical property after heating are shown in Fig. 1. As a result, it is confirmed that the gel physical property is increased as the pH of heated meat paste is increased from 6.51 to 7.45. Accordingly, it is shown that the pH exerts an influence upon physical property of the meat paste after heating.

### Example 1

Influence of pH of fibrous bound food upon flake generation ratio

### (Method)

An acid-denaturation fibrous protein was prepared in accordance with the method described in JP-B-58-1904. That is, a salt-added raw Alaska pollack minced paste was subjected to an acid degeneration treatment by extruding the paste in fibrous shapes (1 to 3 mm in diameter) into an acid degeneration liquid containing sodium chloride (20%), acetic acid (1%) and sodium hydroxide (0.3%), and then heated (95°C steam, 5 minutes) and neutralized with a sodium bicarbonate solution. With 82% portion of the thus obtained acid-denaturation fibrous protein, 13% portion of a meat paste for binding use (raw Alaska pollack meat paste, 3% sodium chloride added) and 5% portion of a seasoning were mixed, and then the mixture was discharged from an 11 mm nozzle. After the discharge, the mixture was heated (95°C steam, 7 minutes), cooled down to room temperature and then cut into 10 to 13 mm to be used as the final product, and measurement of pH and measurement of flake generation ratio were carried out.

The degree of neutralization of the acid-denaturation fibrous protein was changed in such a manner that values of the pH of the final product were distributed within a certain range. A sieve of 4 meshes (JIS code) was used in the measurement of the flake generation ratio, and the amount of the flakes passed through the sieve was measured by shaking 100 times the sieve containing 300 g of the product before freezing to calculate the frequency of the generation of flakes among the whole portion.

### (Results)

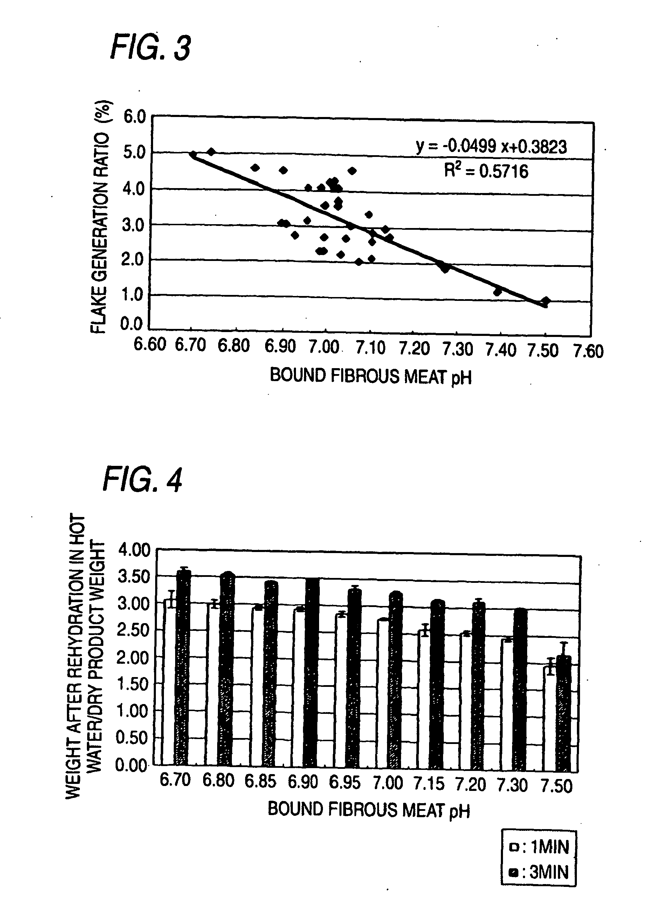

The flake generation ratio when the pH of the final product is from 6.7 to 7.5 is shown in Fig. 2. As a result, the form retention property was decreased as the pH was lowered, and the flake generation ratio was about 3.5% at pH of 6.7. The form retention property was further decreased when the product was subjected to freeze-thawing thereafter (Fig. 3). The flake generation ratio was about 5.0% when the pH of the final product was 6.7, and further increase of the pH results in a very poor yield. Conversely, even when the freezing and thawing were carried out, the flake generation ratio was maintained at 5.0% or less by adjusting the pH of the final product to 6.7 or more.

It was shown from the results that the form retention property of a fibrous bound food is improved by keeping the final pH thereof at 6.7 or more.

### Example 2

Influence of pH of fibrous bound food upon hot water-rehydration property

### (Method)

A fibrous fish meat-bound food was prepared by the same method of Example 1. In addition, the pH was also adjusted in the same manner by adjusting the pH of the acid-denaturation fibrous protein. After the preparation, a drying treatment was carried out, and the hot water-rehydration property was evaluated. The hot water-rehydration property was evaluated as the increased ratio of the weight after rehydration with hot water by soaking 1 g of the final product in 200 ml of hot water (95°C) for 1 or 3 minutes, followed by dividing the resulting weight after rehydration with hot water (wet weight) by the weight after drying (dry weight).

### (Results)

The hot water-rehydration property when the pH of the final product is from 6.7 to 7.5 is shown in Fig. 4. As a result, the hot water-rehydration property was decreased as the pH value increased, and the hot water-rehydration property per minute was about 2.0 at pH of 7.5. This result was the same when the hot water rehydration time was set to 3 minutes. Sensory tests of samples at respective pH values after rehydration with hot water were carried out, with the results shown in Table 1. As a result, it was shown that the texture after rehydration with hot water tends to be hardened as the pH increased. In the case of the sample having a pH of 7.5, the central part thereof was not rehydrated with hot water but remained as the core.

According to the results, it was confirmed that the hot water-rehydration property can be obtained by keeping the final pH of the fibrous bound food at 7.5 or less.

**Table 1**

| Evaluations of hot water-rehydration property of fibrous bound foods having different pH | |
|---|---|
| pH of fibrous bound meat | Texture after rehydration with hot water |
| 6.70 | Good in hot water-rehydration property, soft |
| 6.90 | Good in hot water-rehydration property, soft |
| 7.00 | Good in hot water-rehydration property, good texture |
| 7.20 | A little hard, but good in hot water-rehydration property |
| 7.50 | Core slightly remains |

### Example 3

Influence of pH of fibrous bound food upon hot water-rehydration property (pH adjustment of meat paste for binding use)

### (Method)

A fibrous bound food was prepared by the same method of Example 1. The pH was adjusted by adding a sodium phosphate buffer (disodium hydrogenphosphate, sodium dihydrogenphosphate) to a meat paste for binding use to a concentration of 100 mM. After preparation of the fibrous bound food, drying was carried out and the hot water-rehydration property was then evaluated. The hot water-rehydration property was evaluated in the same manner as in Example 2.

### (Results)

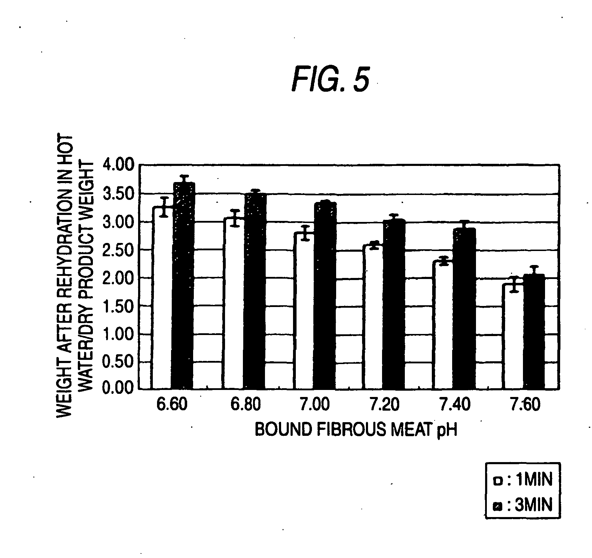

The hot water-rehydration property when the pH of the final product is from 6.6 to 7.6 is shown in Fig. 5. As a result, the hot water-rehydration property was decreased as the pH value increased, and the rehydration in hot water per minute was about 1.9 at the pH of 7.5. The relationship between the hot water-rehydration property and the pH of the final product showed the same tendency even when the hot water rehydration time was set to 3 minutes.

According to the result, it was shown that the hot water-rehydration property can be improved by keeping the final pH of a fibrous bound food at 7.6 or less. In addition, it was shown that the same effect as the case of adjusting the pH of the acid-denaturation fibrous protein can be obtained by adjusting the pH of the meat paste for binding use.

### Example 4

Ink test for showing fibrous texture of the fibrous bound food of the invention

### (Method)

Among the products of the invention described in Example 1, each of those at pH 7.54 and pH 6.96 was soaked in a black ink for 10 seconds and then observed after lightly swishing off the ink.

### (Results)

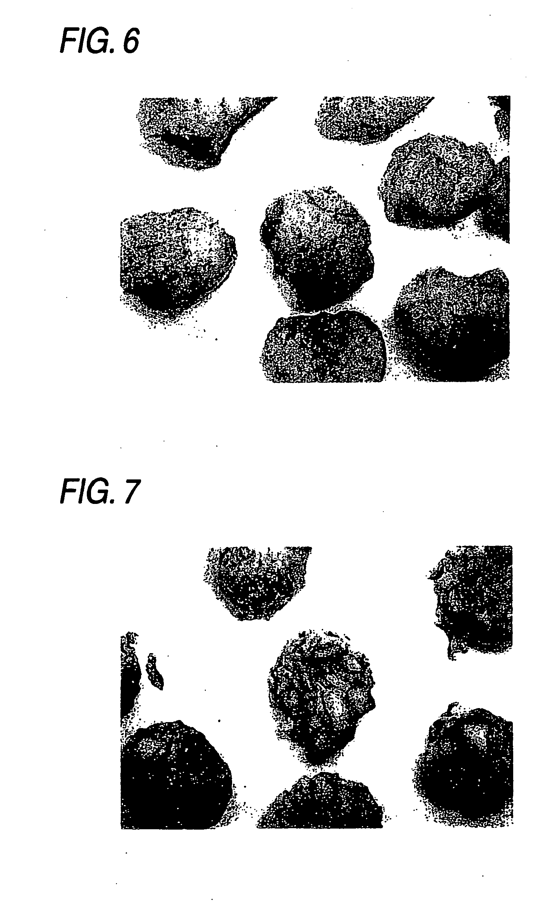

As shown in Fig. 6 (pH 7.54), judging from the appearances, the fibrous texture comes to disappear when the pH becomes 7.5 or more. It means that the hot water-rehydration property of the product is poor, which is also undesirable in terms of the texture. Also, as shown in Fig. 7 (pH 6.96), fibers become distinct when the pH is low, but the binding does not occur and the generation ratio of flakes is increased when the pH is lower than 6.7.

### INDUSTRIAL APPLICABILITY

Food materials having a fibrous texture like a natural fish or shellfish can be provided. Dried products obtainable by drying or the like are excellent in form retention property, have a fibrous texture not unified with a meat paste and are also excellent in hot water-rehydration property. Food materials which can be used in various processes products such as an ingredient used in snack noodle and the like can be provided.

### Brief Description of the Drawings

Fig. 1 is an explanatory drawing showing changes of pH and jelly strength of meat paste.
Fig. 2 is an explanatory drawing showing influence of pH of fibrous bound food upon breaking ratio.
Fig. 3 is an explanatory drawing showing influence of pH of frozen and thawed fibrous bound food upon breaking ratio.
Fig. 4 is an explanatory drawing showing influence of pH of fibrous bound food upon hot water-rehydration property.
Fig. 5 is an explanatory drawing showing influence of pH of fibrous bound food upon hot water-rehydration property (adjustment of pH of binding meat).
Fig. 6 is a photograph that serves as an explanatory drawing showing fibrous texture of the product having pH of 7.54 among those of Example 1.
Fig. 7 is a photograph that serves as an explanatory drawing showing fibrous texture of the product having pH of 6.96 among those of Example 1.

## Claims

1. A process for producing a dried fibrous fish meat-bound food, which comprises drying a fibrous fish meat-bound food obtainable by
molding a fish meat protein into a fibrous form by acid-denaturation, followed by heating;
adjusting a pH thereof to from 6.7 to 7.5; and
mixing said molded and heated fish meat protein with a fish meat paste, followed by molding and heating to thereby bind them, wherein the fish meat protein molded into a fibrous form by acid-denaturation and the fish meat paste have a mixing weight ratio of 98:2 to 80:20.

2. A process for producing a dried fibrous fish meat-bound food, which comprises drying a fibrous fish meat-bound food obtainable by
molding a fish meat protein into a fibrous form by acid-denaturation, followed by heating;
mixing said molded and heated fish meat protein with a fish meat paste; and
adjusting a pH thereof to form 6.7 to 7.5, followed by molding and heating to thereby bind them, wherein the fish meat protein molded into a fibrous form by acid-denaturation and the fish meat paste have a mixing weight ratio of 98:2 to 80:20.

3. A process for producing a dried fibrous fish meat-bound food, which comprises drying a fibrous fish meat-bound food obtainable by
molding a fish meat protein into a fibrous form by acid-denaturation, followed by heating;
mixing said molded and heated fish meat protein with a fish meat paste, followed by molding and heating to thereby bind them, and further allowing any one of the fish meat protein molded into a fibrous form by acid-denaturation, the fish meat paste and a mixture thereof to have a buffer function for thereby adjusting a pH thereof from 6.7 to 7.5, wherein the fish meat protein molded into a fibrous form by acid-denaturation and the fish meat paste have a mixing weight ratio of 98:2 to 80:20.

4. A dried fibrous fish meat-bound food obtainable by the process according to any one of claims 1 to 3, which is excellent in form retention property, has a fibrous texture and is excellent in hot water-rehydration property.

## Patentansprüche

1. Verfahren zur Herstellung eines getrockneten, faserartigen, gebundenen Fischfleisch-Nahrungsmittels, das das Trocknen eines faserartigen gebundenen Fischfleisch-Nahrungsmittels umfasst, erhältlich durch
Formen eines Fischfleischproteins zu einer faserartigen Form durch Säuredenaturierung, gefolgt von Erwärmen;
Einstellen des pH-Werts hiervon auf 6,7 bis 7,5; und
Mischen des geformten und erwärmten Fischfleischproteins mit einer Fischfleischpaste, gefolgt von Formen und Erwärmen, um sie hierdurch zu binden, wobei das Fischfleischprotein, das durch Säuredenaturierung zu einer faserartigen Form geformt ist, und die Fischfleischpaste ein gewichtsbezogenes Mischungsverhältnis von 98:2 bis 80:20 aufweisen.

2. Verfahren zur Herstellung eines getrockneten, faserartigen, gebundenen Fischfleisch-Nahrungsmittels, das das Trocknen eines faserartigen gebundenen Fischfleisch-Nahrungsmittels umfasst, erhältlich durch
Formen eines Fischfleischproteins zu einer faserartigen Form durch Säuredenaturierung, gefolgt von Erwärmen;
Mischen des geformten und erwärmten Fischfleischproteins mit einer Fischfleischpaste; und
Einstellen des pH-Werts hiervon auf 6,7 bis 7,5, gefolgt von Formen und Erwärmen, um sie hierdurch zu binden, wobei das Fischfleischprotein, das durch Säuredenaturierung zu einer faserartigen Form geformt ist, und die Fischfleischpaste ein gewichtsbezogenes Mischungsverhältnis von 98:2 bis 80:20 aufweisen.

3. Verfahren zur Herstellung eines getrockneten, faserartigen, gebundenen Fischfleisch-Nahrungsmittels, das das Trocknen eines faserartigen gebundenen Fischfleisch-Nahrungsmittels umfasst, erhältlich durch
Formen eines Fischfleischproteins zu einer faserartigen Form durch Säuredenaturierung, gefolgt von Erwärmen;
Mischen des geformten und erwärmten Fischfleischproteins mit einer Fischfleischpaste, gefolgt von Formen und Erwärmen, um sie hierdurch zu binden, und ferner Ermöglichen, dass irgendeines von dem Fischfleischprotein, das durch Säuredenaturierung zu einer faserartigen Form geformt ist, der Fischfleischpaste und einer Mischung hiervon eine Pufferfunktion aufweist, um hierdurch den pH-Wert hiervon auf 6,7 bis 7,5 einzustellen, wobei das Fischfleischprotein, das durch Säuredenaturierung zu einer faserartigen Form geformt ist, und die Fischfleischpaste ein gewichtsbezogenes Mischungsverhältnis von 98:2 bis 80:20 aufweisen.

4. Getrocknetes, faserartiges, gebundenes Fischfleisch-Nahrungsmittel, erhältlich durch ein Verfahren gemäss irgendeinem der Ansprüche 1 bis 3, das bezüglich der Formbeibehaltungseigenschaften herausragend ist, eine faserartige Struktur aufweist und bezüglich der Rehydratationseigenschaften in heissem Wasser herausragend ist.

## Revendications

1. Procédé de production d'un aliment séché lié à de la chair de poisson fibreuse, lequel comprend le séchage d'un aliment lié à de la chair de poisson fibreuse, susceptible d'être obtenu par
moulage d'une protéine de chair de poisson en une forme fibreuse par dénaturation à l'acide, suivi de chauffage ;
ajustement du pH à une valeur de 6,7 à 7,5 ; et
mélange de ladite protéine de chair de poisson chauffée et moulée avec une pâte de chair de poisson, suivi de moulage et de chauffage pour ainsi les lier, où la protéine de chair de poisson moulée en une forme fibreuse par dénaturation à l'acide et la pâte de chair de poisson ont un rapport pondéral de mélange de 98:2 à 80:20.

2. Procédé de production d'un aliment séché lié à de la chair de poisson fibreuse, lequel comprend le séchage d'un aliment lié à de la chair de poisson fibreuse, susceptible d'être obtenu par
moulage d'une protéine de chair de poisson en une forme fibreuse par dénaturation à l'acide, suivi de chauffage ;
mélange de ladite protéine de chair de poisson chauffée et moulée avec une pâte de chair de poisson ; et
ajustement du pH à une valeur de 6,7 à 7,5, suivi de moulage et de chauffage pour ainsi les lier, où la protéine de chair de poisson moulée en une forme fibreuse par dénaturation à l'acide et la pâte de chair de poisson ont un rapport pondéral de mélange de 98:2 à 80:20.

3. Procédé de production d'un aliment séché lié à de la chair de poisson fibreuse, lequel comprend le séchage d'un aliment lié à de la chair de poisson fibreuse, susceptible d'être obtenu par
moulage d'une protéine de chair de poisson en une forme fibreuse par dénaturation à l'acide, suivi de chauffage ;
mélange de ladite protéine de chair de poisson chauffée et moulée avec une pâte de chair de poisson, suivi de moulage et de chauffage pour ainsi les lier, et en outre attribution à la protéine de chair de poisson moulée en une forme fibreuse par dénaturation à l'acide, ou à la pâte de chair de poisson ou à leur mélange d'une fonction tampon pour ainsi ajuster le pH à une valeur de 6,7 à 7,5, où la protéine de chair de poisson moulée en une forme fibreuse par dénaturation à l'acide et la pâte de chair de poisson ont un rapport pondéral de mélange de 98:2 à 80:2.

4. Aliment séché lié à de la chair de poisson fibreuse susceptible d'être obtenu par le procédé selon l'une quelconque des revendications 1 à 3, lequel a une excellente propriété de rétention de forme, a une texture fibreuse et a une excellente propriété de réhydratation à l'eau très chaude.
